# EUROPÄISCHE PATENTANMELDUNG

(11) **EP 3 513 863 A1**
(43) Veröffentlichungstag der Anmeldung: **24.07.2019**
(21) Anmeldenummer: 18020032.1
(22) Anmeldetag: 22.01.2018
(51) Int. Cl.: B01D 53/22, B01D 53/047

(54) **VERFAHREN UND ANLAGE ZUR GEWINNUNG VON REINHELIUM**

(71) Anmelder: Linde Aktiengesellschaft, 80331 München (DE)
(72) Erfinder: Keller, Tobias, 83620 Feldkirchen-Westerham (DE); Bauer, Martin, 80804 München (DE); Schiffmann, Patrick, 80339 München (DE)

(57) **Zusammenfassung**

Die vorliegende Erfindung betrifft ein Verfahren (100-400) zur Gewinnung von Reinhelium unter Verwendung einer ersten Membrantrennstufe (1), einer zweiten Membrantrennstufe (2) und einer dritten Membrantrennstufe (3), wobei der ersten Membrantrennstufe (1) ein erstes heliumhaltiges Einsatzgemisch, der zweiten Membrantrennstufe (2) ein zweites heliumhaltiges Einsatzgemisch und der dritten Membrantrennstufe (3) ein drittes heliumhaltiges Einsatzgemisch zugeführt wird, und wobei in der ersten Membrantrennstufe (1) ein erstes Permeat und ein erstes Retentat, in der zweiten Membrantrennstufe (2) ein zweites Permeat und ein zweites Retentat und in der dritten Membrantrennstufe (3) ein drittes Permeat und ein drittes Retentat gebildet werden. Es ist vorgesehen, dass das erste Einsatzgemisch unter Verwendung zumindest eines Teils eines Helium enthaltenden Ausgangsgemischs gebildet wird, dass das zweite Einsatzgemisch unter Verwendung zumindest eines Teils des ersten Permeats gebildet wird, dass das dritte Einsatzgemisch unter Verwendung zumindest eines Teils des zweiten Retentats gebildet wird, dass das zweite Permeat zumindest teilweise unter Erhalt des Reinheliums und eines Restgemischs durch Druckwechseladsorption bearbeitet wird, und dass zumindest ein Teil des dritten Permeats und/oder zumindest ein Teil des dritten Retentats in das Verfahren (100) zurückgeführt wird. Eine entsprechende Anlage ist ebenfalls Gegenstand der vorliegenden Erfindung.

## Beschreibung

Die Erfindung betrifft ein Verfahren und eine Anlage zur Gewinnung von Reinhelium gemäß den Oberbegriffen der unabhängigen Patentansprüche.

### Stand der Technik

Verfahren und Anlagen zur Gewinnung von Helium, insbesondere aus Erdgas, sind beispielsweise im Artikel "Noble Gases" in Ullmann's Encyclopedia of Industrial Chemistry, Onlineausgabe, 15. März 2001, DOI: 10.1002/14356007.a10_045.pub2, beschrieben. Neben kryogenen Verfahren kommen zur Gewinnung von Helium aus Erdgas auch Membranverfahren zum Einsatz. Auch kombinierte Verfahren können verwendet werden. Zu Details sei beispielsweise auf den Abschnitt 4.2.1.2, "Crude Helium Extraction by Permeation Processes" in dem erwähnten Artikel verwiesen.

Ein entsprechendes Membranverfahren kann insbesondere die Verwendung mehrerer Membrantrennstufen umfassen, wobei in jeder Membrantrennstufe ein an Helium angereichertes Permeat und ein an Helium abgereichertes Retentat gebildet werden. Diese Membrantrennstufen können in unterschiedlicher Weise verschaltet werden.

Beispielsweise offenbart der erwähnte Artikel in Figur 23 ein Verfahren, in dem einer ersten Membrantrennstufe ein Helium enthaltendes Einsatzgemisch zugeführt wird. Ein Permeat der ersten Membrantrennstufe wird verdichtet und einer zweiten Membrantrennstufe zugeführt. Ein Permeat der zweiten Membrantrennstufe stellt das Produkt des Verfahrens dar. Ein Retentat der ersten Membrantrennstufe wird aus dem Verfahren abgeführt. Ein Retentat der zweiten Membrantrennstufe wird vor die erste Membrantrennstufe zurückgeführt und mit dem Einsatzgemisch vereinigt.

Aus der US2014/0243574 A1 ist ein dreistufiges Membranverfahren bekannt, in dem einer ersten Membrantrennstufe ein Helium enthaltendes Einsatzgemisch zugeführt wird. Ein Permeat der ersten Membrantrennstufe wird verdichtet und einer zweiten Membrantrennstufe zugeführt. Ein Permeat der zweiten Membrantrennstufe enthält etwa 30 Molprozent Helium. Es kann weiter zu einem Heliumprodukt aufgereinigt oder bei der Bildung des Einsatzgemischs, das der ersten Membrantrennstufe zugeführt wird, verwendet werden. Es wird hierzu beispielsweise zusammen mit frischem Erdgas in einen Tank eingespeist. Ein Retentat der zweiten Membrantrennstufe wird einer dritten Membrantrennstufe zugeführt. Ein Permeat der dritten Membrantrennstufe wird zusammen mit dem Permeat der ersten Membrantrennstufe verdichtet und zusammen mit diesem der zweiten Membrantrennstufe zugeführt. Retentate der ersten und dritten Membrantrennstufe werden vereinigt und als Erdgasprodukt bereitgestellt.

In sämtlichen Verfahren zur Heliumgewinnung können zur Herstellung von Reinhelium stromab einer kryogenen oder membranbasierten Anreicherung Destillations- oder Druckwechseladsorptionsschritte zum Einsatz kommen. Auf diese Weise können hochreine Heliumprodukte bereitgestellt werden.

Wenngleich die vorliegende Erfindung überwiegend unter Bezugnahme auf die Gewinnung von Helium aus Erdgas beschrieben wird, eignet sie sich grundsätzlich in gleicher Weise für andere Einsatzgebiete, beispielsweise für die Rückgewinnung von Helium aus Helium enthaltenden Gasgemischen, die beispielsweise beim Verdampfen von Helium in kryogenen Anwendungen gebildet werden. Entsprechende Gasgemische werden nachfolgend als "Ausgangsgemische" bezeichnet.

Die vorliegende Erfindung stellt sich die Aufgabe, die Gewinnung von Reinhelium unter Einsatz von Membrantrennstufen aus entsprechenden Ausgangsgemischen zu verbessern und effizienter zu gestalten.

### Offenbarung der Erfindung

Diese Aufgabe wird durch ein Verfahren zur Gewinnung von Reinhelium und eine entsprechende Anlage mit den Merkmalen der unabhängigen Patentansprüche gelöst. Ausgestaltungen der Erfindung sind jeweils Gegenstand der abhängigen Patentansprüche und der nachfolgenden Beschreibung.

Vor der Erläuterung der Vorteile der vorliegenden Erfindung werden nachfolgend einige bei der Beschreibung der Erfindung verwendete Begriffe näher definiert.

Unter einem "Permeat" wird hier ein Gas oder Gasgemisch verstanden, das überwiegend oder ausschließlich Komponenten aufweist, die von einer in einer Membrantrennstufe eingesetzten Membran nicht oder überwiegend nicht zurückgehalten werden, die also die Membran (im Wesentlichen oder zumindest bevorzugt) ungehindert passieren. Entsprechend handelt es sich bei einem "Retentat" um ein Gas oder Gasgemisch, das überwiegend oder ausschließlich Komponenten aufweist, die von der in der Membrantrennstufe eingesetzten Membran vollständig oder zumindest überwiegend zurückgehalten werden.

Gasgemische können im hier verwendeten Sprachgebrauch reich oder arm an einer oder mehreren Komponenten sein, wobei der Begriff "reich" für einen Gehalt von wenigstens 90%, 95%, 99%, 99,9% oder 99,99% und der Begriff "arm" für einen Gehalt von höchstens 10%, 5%, 1%, 0,01% oder 0,01% auf molarer, Gewichts- oder Volumenbasis stehen kann. Gasgemische können im hier verwendeten Sprachgebrauch ferner angereichert oder abgereichert an einer oder mehreren Komponenten sein, wobei sich diese Begriffe auf einen entsprechenden Gehalt in einem anderen Gasgemisch beziehen, unter Verwendung dessen das betrachtete Gasgemisch gebildet wurde. Das betrachtete Gasgemisch ist dabei "angereichert", wenn es zumindest den 2-fachen, 5-fachen, 10-fachen, 100-fachen oder 1.000-fachen Gehalt der bezeichneten Komponente(n) aufweist, und "abgereichert", wenn es höchstens den 0,5-fachen, 0,1-fachen, 0,01-fachen oder 0,001-fachen Gehalt der bezeichneten Komponente(n) aufweist.

Unter "Reinhelium" sei hier insbesondere Helium mit einer Reinheit von mindestens 99,5 (sogenanntes Helium 2.5), 99,9 (Helium 2.9), 99,95 (Helium 3.5), 99,99 (Helium 4.0), 99,995 (Helium 4.5), 99,999 (Helium 5.0), 99,9995 (Helium 5.5), 99,9999 (Helium 6.0) oder 99,99999 Molprozent (Helium 7.0) verstanden.

Ist hier davon die Rede, dass ein Gasgemisch unter Verwendung eines anderen Gasgemischs "gebildet" wird, sei darunter verstanden, dass das betrachtete Gasgemisch zumindest einige der in dem anderen Gasgemisch enthaltene oder diesen gebildete Komponenten aufweist. Ein Bilden eines Gasgemischs aus einem anderen kann beispielsweise ein Abzweigen eines Teils des Gasgemischs, ein Zuspeisen einer oder mehrerer weiterer Komponenten oder Gasgemischs, ein chemisches oder physikalisches Umsetzen zumindest einiger Komponenten, sowie ein Erwärmen, Abkühlen, Verdampfen, Kondensieren usw. umfassen. Ein "Bilden" eines Gasgemischs aus einem anderen Gasgemisch kann aber auch lediglich die Bereitstellung des anderen Gasgemischs oder eines Teils hiervon in geeigneter Form, beispielsweise in einem Behälter oder einer Leitung, umfassen.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen. Jedoch bewegen sich derartige Drücke und Temperaturen typischerweise in bestimmten Bereichen, die beispielsweise ± 1%, 5%, 10%, 20% oder 25% um einen Mittelwert liegen. Entsprechende Druckniveaus und Temperaturniveaus können in disjunkten Bereichen liegen oder in Bereichen, die einander überlappen. Dasselbe Druckniveau kann beispielsweise auch noch vorliegen, wenn es zu unvermeidlichen Druckverlusten kommt. Entsprechendes gilt für Temperaturniveaus. Bei den hier in bar angegebenen Druckniveaus handelt es sich um Absolutdrücke.

Die vorliegende Erfindung schlägt ein mehrstufiges Membrantrennverfahren vor, bei dem eine erste, eine zweite und eine dritte Membrantrennstufe eingesetzt wird, in denen jeweils ein Permeat und ein Retentat gebildet werden. Das Permeat der ersten Membrantrennstufe wird nachfolgend als "erstes" Permeat, das Permeat der zweiten Membrantrennstufe als "zweites" Permeat und das Permeat der dritten Membrantrennstufe als "drittes" Permeat bezeichnet. Entsprechend wird das Retentat der ersten Membrantrennstufe als "erstes" Retentat, das Retentat der zweiten Membrantrennstufe als "zweites" Retentat und das Retentat der dritten Membrantrennstufe als "drittes" Retentat bezeichnet. Den Membrantrennstufen werden jeweils Gasgemische zugeführt. Ein der ersten Membrantrennstufe zugeführtes Gasgemisch wird hier als "erstes" Einsatzgemisch, ein der zweiten Membrantrennstufe zugeführtes Gasgemisch als "zweites" Einsatzgemisch und ein der dritten Membrantrennstufe zugeführtes Gasgemisch als "drittes" Einsatzgemisch bezeichnet.

Im Rahmen der vorliegenden Erfindung ist vorgesehen, dass das erste Einsatzgemisch unter Verwendung zumindest eines Teils eines Helium enthaltenden Ausgangsgemischs, also beispielsweise von Erdgas, gebildet wird, wobei bei der Bildung des ersten Einsatzgemischs auch weitere Verfahrensschritte und Gasgemische beteiligt sein können, wie nachfolgend erläutert. Ferner sieht die vorliegende Erfindung vor, dass das zweite Einsatzgemisch unter Verwendung zumindest eines Teils des ersten Permeats gebildet wird, und dass das dritte Einsatzgemisch unter Verwendung zumindest eines Teils des zweiten Retentats gebildet wird. Die vorliegende Erfindung umfasst, dass das zweite Permeat zumindest teilweise unter Erhalt des Reinheliums und eines Restgemischs durch Druckwechseladsorption bearbeitet wird. Ein entsprechendes Restgemisch wird auch als "Tailgas" bezeichnet. Es umfasst insbesondere die in der Druckwechseladsorption während eines Adsorptionstaktes adsorbierten Komponenten, sowie einen Teil der am Ende des Adsorptionstaktes nicht adsorbierten Komponenten in den Zwischenräumen des Adsorbens. Darunter befindet sich auch nicht adsorbiertes Helium.

Ein wesentlicher Aspekt der vorliegenden Erfindung ist der, zumindest einen Teil des dritten Permeats und/oder zumindest ein Teil des dritten Retentats in das Verfahren zurückzuführen. Im Gegensatz zu dem eingangs erwähnten, in Ullmann's Encyclopedia of Industrial Chemistry beschriebenen Verfahren, in dem das gesamte Retentat einer zweiten Membrantrennstufe rückgeführt wird, kann auf diese Weise eine Optimierung der jeweiligen stofflichen Zusammensetzungen der Einsatzgemische zu den einzelnen Membrantrennstufen erzielt und auf diese Weise die Trennung in diesen Membrantrennstufen besonders vorteilhaft beeinflusst werden. Details und spezifische Vorteile werden nachfolgend unter Bezugnahme auf die bevorzugten Ausführungsformen der vorliegenden Erfindung erläutert.

Gemäß einer besonders bevorzugten Ausführungsform der vorliegenden Erfindung wird zumindest ein Teil des dritten Retentats bei der Bildung des ersten Einsatzgemischs verwendet, also zu dem Ausgangsgemisch oder zu einem bei der Bildung des ersten Einsatzgemischs verwendeten Teil des Ausgangsgemischs zugespeist. Auf diese Weise kann in Ausgestaltungen der vorliegenden Erfindung entweder der Gehalt an Helium in dem ersten Einsatzgemisch beeinflusst oder zumindest die Menge des in der ersten Membrantrennstufe eingesetzten ersten Einsatzgemischs insgesamt erhöht werden. In ersterem Fall kann insbesondere die Konzentration an Helium in dem ersten Einsatzgemisch beeinflusst werden, so dass die Triebkraft in der ersten Membrantrennstufe ebenfalls beeinflusst werden kann. Insbesondere kann durch eine entsprechende Rückführung deshalb, weil die Helium-Moleküle, die in dem Teilstrom des dritten Retentats enthalten sind, ein weiteres Mal durch die entsprechende Membranstufe geführt werden, die in der dritten Membranstufe installierte Membranfläche reduziert werden, da dort eine niedrigere Heliumausbeute ausreicht, während dadurch gleichzeitig die Konzentration im ersten Einsatzgemisch und damit die Triebkraft erhöht werden.

Eine Ausbeuteerhöhung kann insbesondere dann erfolgen, wenn die erste Membrantrennstufe als sogenannte Ausbeutestufe betrieben wird. Von einer Ausbeutestufe spricht man dann, wenn eine derartige Membrantrennstufe durch die Wahl der verwendeten Membranfläche daraufhin optimiert wird, dass ein möglichst großer Anteil des in dem jeweiligen Einsatzgemisch enthaltenen Heliums in das Permeat übergeht, ein möglichst geringer Anteil hingegen in dem Retentat verbleibt. Zweck einer Ausbeutestufe ist es also, einen möglichst großen Anteil von Helium aus dem jeweiligen Einsatzgemisch in das entsprechende Permeat zu überführen und möglichst wenig Helium über das Retentat zu verlieren. Hierbei lässt sich allerdings typischerweise nicht vermeiden, dass auch andere in dem Einsatzgemisch enthaltene Komponenten in das Permeat übergehen und die Heliumkonzentration in dem Permeat einer solchen Ausbeutestufe verhältnismäßig gering ist, weil für eine möglichst vollständige Überführung des Heliums in das Permeat in Kauf genommen wird, dass auch andere Komponenten in einem nicht unbeträchtlichen Anteil in dieses übergehen.

Auch im letzteren Fall, in dem das dritte Retentat beispielsweise dieselbe oder im Wesentlichen dieselbe Heliumkonzentration wie das Ausgangsgemisch oder dessen bei der Bildung des ersten Einsatzgemischs verwendeter Anteil aufweist, kann die Gesamtausbeute an Helium in diesem Verfahren insgesamt gesteigert werden. Die Ursache wird nachfolgend erläutert.

Durch die Rückführung zumindest eines Teils des dritten Retentats und dessen Verwendung bei der Bildung des ersten Einsatzgemischs kann auch dann, wenn sich hieraus eine geringe(re) oder zumindest keine erhöhte Heliumkonzentration im ersten Trenneinsatz der als Ausbeutestufe betriebenen ersten Membrantrennstufe ergibt, ein Vorteil erzielt werden. Dieser ergibt sich insbesondere aus der in dieser Ausbeutestufe vorteilhafterweise verwendeten großen Membranfläche und der relativen Verringerung der Permeatmenge im Verhältnis zur Membranfläche. Hierdurch wird der Druckverlust auf der Permeatseite der Ausbeutestufe verringert. Ein entsprechender Druckverlust führt dazu, dass sich über die Länge einer entsprechenden Membranstufe der Permeatdruck auf der Niederdruckseite ansteigt. Infolgedessen wird der Druckgradient und somit auch die Triebkraft verringert. Wird dieser Druckverlust verringert, kann der Permeatdruck von Helium über die gesamte Membranlänge konstant gering gehalten werden und auf diese Weise wiederum die Triebkraft für das Helium zwischen der Hochdruckseite und der Niederdruckseite der Membran erhöht werden.

Gemäß einer besonders bevorzugten Ausgestaltung der vorliegenden Erfindung wird zumindest ein Teil des Restgemischs bei der Bildung des zweiten Einsatzgemischs verwendet. Dieses Vorgehen ermöglicht einen besonders effizienten Betrieb der zusätzlich mit dem Restgemisch beaufschlagten zweiten Membrantrennstufe, da auf diese Weise eine Erhöhung der Konzentration an Helium bewirkt werden kann. Diese verbessert die Trennung in der zweiten Membrantrennstufe, die vorzugsweise nicht als Ausbeutestufe betrieben wird, sondern in der ein möglichst hoher Gehalt an Helium in dem Permeat erzielt werden soll, und bei der es sich daher um eine Anreicherungsstufe bzw. Aufreinigungsstufe handelt.

In der Druckwechseladsorption, die im Rahmen der vorliegenden Erfindung unter Verwendung eines oder mehrerer Druckwechseladsorptionsschritte durchgeführt werden kann, kann prinzipbedingt nicht gleichzeitig Reinhelium als Produkt einerseits und ein vollständig von Helium befreites Restgemisch andererseits gebildet werden. Das Restgemisch enthält vielmehr noch beträchtliche Mengen Helium. Die Heliumkonzentration in dem Restgemisch liegt typischerweise oberhalb jener des ersten Permeats, das ansonsten zumindest zum Teil bei der Bildung des zweiten Trenneinsatzes verwendet wird.

Die zuvor erläuterten Ausbeutestufen werden vorzugsweise derart betrieben, dass zumindest 80% des in dem jeweiligen Einsatzgemisch enthaltenen Heliums in das Permeat übergehen. Es können auch größere Anteile des jeweils in dem Einsatzgemisch enthaltenen Heliums in das Permeat überführt werden, beispielsweise wenigstens 90%, 95% oder 99%. Auf diese Weise ist das jeweils gebildete Retentat arm an oder im Wesentlichen frei von Helium und braucht daher keiner weiteren Bearbeitung zugeführt zu werden, um in diesem enthaltenes Helium zurück zu gewinnen. Die zusätzlich im Kreis geführten Volumina erhöhen sich, je höher die gewünschte Ausbeute der Gesamtanlage und damit die Ausbeute der Ausbeutestufe ist. Außerdem wird der Energiebedarf durch einen steigenden Anteil an im Kreis geführten Volumen steigen.

Vorteilhafterweise weist das zweite Permeat, das zumindest teilweise unter Erhalt des Reinheliums und des Restgemischs durch die Druckwechseladsorption bearbeitet wird, einen Gehalt von 20 bis 80 Molprozent, insbesondere von 35 bis 65 Molprozent, Helium auf. Auf diese Weise lässt sich die Druckwechseladsorption besonders effizient und unter Erzielung besonders hoher Reinheiten des Heliumprodukts durchführen.

Um die besonderen Vorteile der vorliegenden Erfindung zu erzielen, weist das Restgemisch aus der Druckwechseladsorption vorteilhafterweise einen Gehalt von 10 bis 70 Molprozent, insbesondere von 20 bis 50 Molprozent, Helium auf.

In einer vorteilhaften Ausgestaltung des erfindungsgemäßen Verfahrens werden das Restgemisch oder dessen bei der Bildung des zweiten Einsatzgemischs verwendeter Teil, das erste Permeat oder dessen bei der Bildung des zweiten Einsatzgemischs verwendeter Teil und das dritte Permeat oder dessen bei der Bildung des zweiten Einsatzgemischs verwendeter Teil vereinigt und gemeinsam verdichtet. Anschließend erfolgt eine Zuführung zu der zweiten Membrantrennstufe in Form oder als Teil des zweiten Einsatzgemischs. Auf diese Weise können die erläuterten Gasgemische unter Verwendung nur eines Verdichters auf einen Druck gebracht werden, der für eine Einspeisung in die zweite Membrantrennstufe erforderlich ist. Im erläuterten Fall wird vorteilhafterweise stromauf des Druckwechseladsorptionsverfahrens eine Verdichtung des zweiten -Permeats und eine Wasserstoffentfernung vorgenommen. Grundsätzlich kann jedoch auch zunächst eine Wasserstoffentfernung, anschließend die Durchführung der Druckwechseladsorption, und danach eine Verdichtung erfolgen, wie insbesondere auch unter Bezugnahme auf in den Zeichnungen gezeigte Ausführungsformen erläutert.

Im Rahmen der soeben erläuterten Ausführungsform der vorliegenden Erfindung werde vorteilhafterweise das Restgemisch oder dessen bei der Bildung des zweiten Einsatzgemischs verwendete Teil, das erste Permeat oder dessen bei der Bildung des zweiten Einsatzgemischs verwendeter Teil und das dritte Permeat oder dessen bei der Bildung des zweiten Einsatzgemischs verwendeter Teil nach deren Vereinigung und deren gemeinsamer Verdichtung einer Kohlendioxidentfernung unterworfen. Entsprechende Gasgemische enthalten insbesondere dann Kohlendioxid, wenn die erste Membrantrennstufe als erläuterte Ausbeutestufe betrieben wird. Insbesondere in einem derartigen Fall können nennenswerte Mengen an Kohlendioxid neben Helium in das Permeat übergehen. Die Kohlendioxidentfernung im Rahmen der vorliegenden Erfindung kann dabei insbesondere in Form einer Druckwechseladsorption, in einer Temperaturwechseladsorption oder eines Membranverfahrens ausgebildet sein, wie sie grundsätzlich aus dem Stand der Technik bekannt sind.

Gemäß einer weiteren Ausführungsform der vorliegenden Erfindung können das Restgemisch oder dessen bei der Bildung des zweiten Einsatzgemischs verwendeter Teil und das dritte Permeat oder dessen bei der Bildung des zweiten Einsatzgemischs verwendeter Teil vereinigt und gemeinsam zu dem ersten Permeat oder dessen bei der Bildung des zweiten Einsatzgemischs verwendeten Teil verdichtet werden. Auf diese Weise ist eine spezifische Druckanpassung möglich, wobei jeweils unterschiedliche Druckerhöhungen realisiert werden können.

In der soeben erläuterten Ausführungsform der vorliegenden Erfindung werden vorteilhafterweise das Restgemisch oder dessen bei der Bildung des zweiten Einsatzgemischs verwendeter Teil und das dritte Permeat oder dessen bei der Bildung des zweiten Einsatzgemischs verwendeter Teil nach deren Vereinigung deren gemeinsamer Verdichtung einer Kohlendioxidentfernung unterworfen. Mit anderen Worten wird hier eine Kohlendioxidentfernung stromaufwärts der zweiten Membrantrennstufe in den rückgeführten Anteilen vorgenommen. Durch eine Kohlendioxidentfernung an dieser Stelle wird die Anreicherung innerhalb des gebildeten Kreislaufes stark limitiert. Vor der zweiten Membrantrennstufe liegt auf diese Weise nur Kohlendioxid aus dem Ausgangsgemisch vor, das in das erste Permeat übergeht und wird der zweiten Membrantrennstufe in dem zweiten Trenneinsatz zugeführt. Zwar ist der Kohlendioxidgehalt angereichert durch die erste Membrantrennstufe, der Kohlendioxidgehalt wird aber nicht durch zusätzliches Kohlendioxid aus der Rückführung des Restgemischs oder des dritten Permeats bzw. entsprechender Teile erhöht. Der bei einer Kohlendioxidentfernung in der Rückführung zu behandelnde Strom ist zudem kleiner und stärker mit Kohlendioxid angereichert, was eine Kohlendioxidentfernung u.U. günstiger machen kann. Außerdem besteht die Möglichkeit, diese ggf. bei einem günstigeren Zwischendruckniveau zu betreiben. Hierbei müssen Vor- und Nachteile im Vergleich zu der nachfolgend erläuterten Ausführungsform miteinander abgewogen werden.

Eine weitere Ausführungsform der vorliegenden Erfindung umfasst vorteilhafterweise, dass das dritte Permeat oder dessen bei der Bildung des zweiten Einsatzgemischs verwendeter Teil und das erste Permeat oder dessen bei der Bildung des zweiten Einsatzgemischs verwendeter Teil vereinigt und gemeinsam separat zu dem Restgemisch oder dessen bei der Bildung des zweiten Einsatzgemischs verwendeten Teil verdichtet werden. Im Rahmen einer derartigen Ausgestaltung der vorliegenden Erfindung ist insbesondere eine Verdichtung von Niederdruck auf Mitteldruck und anschließend auf Hochdruck, wie nachfolgend erläutert, zwischen der zweiten und der dritten Membranstufe möglich. Vorteilhafterweise wird hierbei insbesondere das Retentat der dritten Membrantrennstufe vor die erste Membrantrennstufe zurückgeführt. Das Retentat der dritten Membrantrennstufe weist in diesem Fall eine sehr ähnliche Heliumkonzentrat auf wie der erste Trenneinsatz bzw. der zur Bildung dieses ersten Trenneinsatzes verwendete Anteil des Ausgangsgemischs.

In der soeben erläuterten Ausführungsform der vorliegenden Erfindung wird das dritte Permeat oder dessen bei der Bildung des zweiten Einsatzgemischs verwendeter Teil und das erste Permeat oder dessen bei der Bildung des zweiten Einsatzgemischs verwendeter Teil vorteilhafterweise nach deren Vereinigung und deren gemeinsamer Verdichtung einer Kohlendioxidentfernung unterworfen. Auf diese Weise kann das gesamte Kohlendioxid, also auch jenes aus dem Einsatzgemisch bzw. ersten Permeat, entfernt werden.

Die zuvor unter Bezugnahme auf die unterschiedlichen Ausgestaltungen der vorliegenden Erfindung angesprochenen Kohlendioxidentfernungsschritte werde vorteilhafterweise, wie unter Bezugnahme auf die erste Ausführungsform erwähnt, unter Verwendung eines Adsorptionsprozesses durchgeführt, in dem zumindest ein Spül- und Verdrängungsgas eingesetzt wird. Ein entsprechendes Spül- und Verdrängungsgas kann insbesondere dazu eingesetzt werden, Adsorptionseinheiten zu regenerieren oder Gase aus diesem auszutragen. Besondere vorteilhaft ist es, wenn das oder eines der Spül- und Verdrängungsgase zumindest einen Teil des zweiten oder dritten Retentats umfasst. Auf diese Weise kann eine besondere gute Heliumausbeute erzielt werden.

Wie bereits erwähnt, kann das zweite Permeat oder dessen durch Druckwechseladsorption bearbeitete Teil einer zumindest teilweisen Wasserstoffentfernung unterworfen werden. Auf diese Weise kann vermieden werden, dass zu große Mengen Wasserstoff in das Reinhelium übergeht und/oder sich in dem Verfahren in den gebildeten Kreisläufen anreichern. Eine entsprechende Wasserstoffentfernung kann insbesondere katalytisch durchgeführt werden, wobei Wasserstoff mit Sauerstoff zu Wasser umgesetzt wird. Das gebildete Wasser kann einfach aus dem Verfahren entfernt werden.

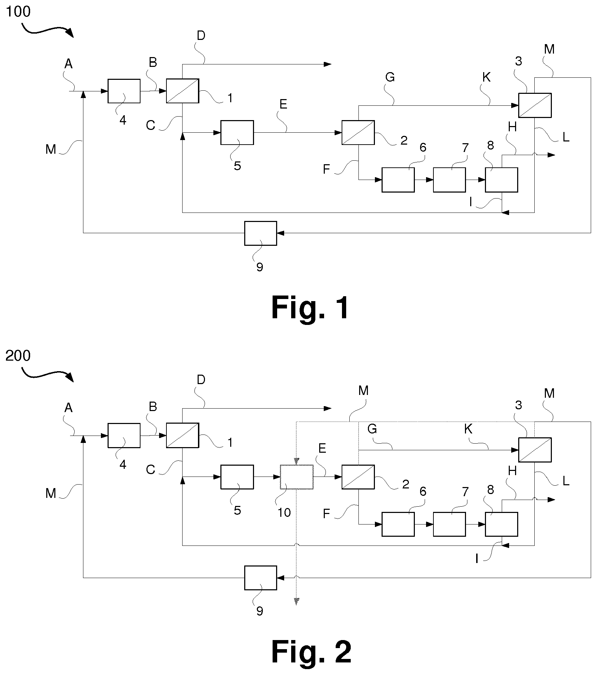

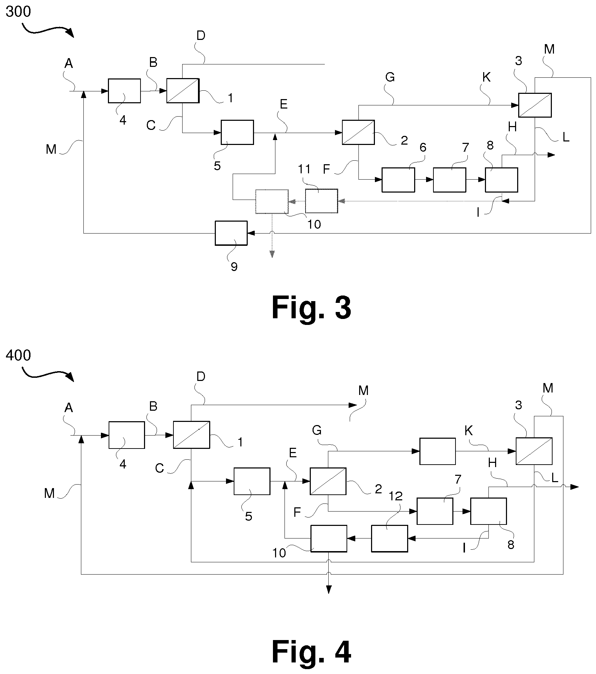

Wie bereits erläutert, kann das erfindungsgemäße Verfahren grundsätzlich unter Verwendung unterschiedlicher Druckniveaus durchgeführt werden. So kann die erste Membrantrennstufe auf einem Druckniveau von 10 bis 120 bar, die zweite Membrantrennstufe auf einem Druckniveau von 10 bis 120 bar und die dritte Membrantrennstufe auf einem Druckniveau von 10 bis 120 bar durchgeführt werden. In einer alternativen Ausführungsgestaltung ist es möglich, die erste Membrantrennstufe auf einem Druckniveau von 30 bis 100 bar, die zweite Membrantrennstufe auf einem Druckniveau von 30 bis 100 bar und die dritte Membrantrennstufe auf einem Druckniveau von 30 bis 100 bar zu betreiben. Die erste Alternative wird nachfolgend insbesondere unter Bezugnahme auf die Figuren 1 bis 3, die zweite Alternative unter Bezugnahme auf die Figur 4 erläutert.

Die Druckniveaus der ersten bis dritten Membrantrennstufen können dabei insbesondere gleich sein. Es können jedoch auch ggf. unterschiedliche Druckniveaus verwendet werden. Insbesondere können die erste und die dritte Membrantrennstufe vorteilhafterweise auf demselben Druckniveau betrieben werden. Der Grund hierfür ist die Rückführung des dritten Retentats zur ersten Membrantrennstufe. Zwar wäre es möglich, die dritte Membrantrennstufe auf einem niedrigeren oder höheren Druckniveau als die erste zu betreiben, allerdings würde im ersten Fall trotzdem ein gleich großer Stoffmengenstrom verdichtet werden, ohne dadurch wenigstens Membranfläche in der dritten Membrantrennstufe einsparen zu können, während im zweiten Fall zuvor aufgewandte Verdichtungsenergie bei der Entspannung auf das Einspeisedruckniveau wieder zumindest zum Teil verlorenginge. Die zweite Membrantrennstufe könnte auf einem abweichenden Druckniveau betrieben werden. Bei identischen Druckniveaus kann das erfindungsgemäße Verfahren mittels nur eines Verdichters im Hochdruckweg durchgeführt werden.

Die vorliegende Erfindung erstreckt sich auch auf eine Anlage zur Gewinnung von Reinhelium mit einer ersten Membrantrennstufe, einer zweiten Membrantrennstufe und einer dritten Membrantrennstufe, wobei Mittel vorgesehen sind, die dafür eingerichtet sind, der ersten Membrantrennstufe ein erstes heliumhaltiges Einsatzgemisch, der zweiten Membrantrennstufe ein zweites heliumhaltiges Einsatzgemisch und der dritten Membrantrennstufe ein drittes heliumhaltiges Einsatzgemisch zuzuführen. Die erste Membrantrennstufe ist dafür eingerichtet, ein erstes Permeat und ein erstes Retentat zu bilden. Die zweite Membrantrennstufe ist dafür eingerichet, ein zweites Permeat und ein zweites Retentat zu bilden. Die dritte Membrantrennstufe ist dafür eingerichtet, ein drittes Permeat und ein drittes Retentat zu bilden. Die erfindungsgemäße Anlage zeichnet sich durch Mittel aus, die dafür eingerichtet sind, das erste Einsatzgemisch unter Verwendung zumindest eines Teils eines Helium enthaltendenden Ausgangsgemischs zu bilden, das zweite Einsatzgemisch unter Verwendung zumindes eines Teils des ersten Permeats zu bilden, das dritte Einsatzgemisch unter Verwendung zumindest eines Teils des zweiten Retentats zu bilden, das zweite Permeat zumindest teilweise unter Erhalt des Reinheliums und eines Restgemischs durch Druckwechseladsorption zu bearbeiten, und zumindest einen Teil des dritten Permeats und/oder zumindest einen Teil des dritten Retentats in das Verfahren zurückzuführen.

Bezüglich Merkmalen und Vorteilen einer entsprechenden Anlage, die vorteilhafterweise Mittel aufweist, die sie zur Durchführung eines Verfahrens in den zuvor erläuterten Ausgestaltungen befähigen, sei auf die obigen Ausführungen ausdrücklich verwiesen.

Ausführungsformen der Erfindung werden nachfolgend unter Bezugnahme auf die beigefügten Zeichnungen näher erläutert.

### Kurze Beschreibung der Zeichnungen

Figur 1 zeigt ein Verfahren gemäß einer Ausführungsform der Erfindung in Form eines schematischen Prozessflussdiagramms.
Figur 2 zeigt ein Verfahren gemäß einer Ausführungsform der Erfindung in Form eines schematischen Prozessflussdiagramms.
Figur 3 zeigt ein Verfahren gemäß einer Ausführungsform der Erfindung in Form eines schematischen Prozessflussdiagramms.
Figur 4 zeigt ein Verfahren gemäß einer Ausführungsform der Erfindung in Form eines schematischen Prozessflussdiagramms.

### Ausführliche Beschreibung der Zeichnungen

In den Figuren tragen einander funktional oder baulich entsprechende Elemente einander entsprechende Bezugszeichen und werden der Übersichtlichkeit halber nicht wiederholt erläutert. Die nachfolgenden Erläuterungen betreffen dabei Verfahren und entsprechende Anlagen in gleicher Weise. Es versteht sich, dass entsprechende Anlagen bzw. Verfahren in der Praxis auch optionale oder obligatorische weitere Komponenten bzw. Verfahrensschritte umfassen können. Diese sind in den nachfolgenden Figuren lediglich der Übersichtlichkeit halber nicht dargestellt.

In Figur 1 ist ein Verfahren gemäß einer Ausführungsform der Erfindung in Form eines schematischen Prozessflussdiagramms veranschaulicht und insgesamt mit 100 bezeichnet. Kern des Verfahrens sind insbesondere eine erste Membrantrennstufe 1, eine zweite Membrantrennstufe 2 und eine dritte Membrantrennstufe 3.

Im Verfahren 100 wird ein Ausgangsgemisch A der zuvor erläuterten Art zugeführt und in beliebigen Aufbereitungsschritten (nicht gezeigt) optional aufbereitet. Das Ausgangsgemisch A wird mit einem Strom M (siehe unten) vereinigt und einer optionalen Erwärmung 4 zugeführt. Dabei wird also unter Verwendung des Ausgangsgemischs A oder eines Teils hiervon ein erstes Einsatzgemisch B gebildet, das der ersten Membrantrennstufe 1 zugeführt wird.

In der ersten Membrantrennstufe 1 werden ein erstes Permeat C und ein erstes Retentat D gebildet. Unter Verwendung des ersten Permeats oder eines Teils hiervon wird unter Verdichtung 5 ein zweites Einsatzgemisch E gebildet und der zweiten Membrantrennstufe 2 zugeführt.

In der zweiten Membrantrennstufe 2 werden ein zweites Permeat F und ein zweites Retentat G gebildet. Das zweite Permeat F wird im dargestellten Beispiel nach einer Verdichtung 6 und Wasserstoffentfernung 7 zumindest teilweise einer Druckwechseladsorption 8 unterworfen. In dieser werden Reinhelium H als Produkt und ein Restgemisch I gebildet.

Zugleich wird das Retentat G der zweiten Membrantrennstufe 2 der dritten Membrantrennstufe 3 zugeführt, es wird also unter Verwendung zumindest eines Teils des zweiten Retentats G ein drittes Einsatzgemisch K gebildet. In der dritten Membrantrennstufe 3 werden ein drittes Permeat L und ein drittes Retentat M gebildet.

Im dargestellten Beispiel werden nun das Restgemisch I und das dritte Permeat L miteinander und mit dem ersten Permeat C vereinigt und der Verdichtung 5 unterworfen. Das zweite Einsatzgemisch E wird also unter Verwendung des Restgemischs I, des dritten Permeats L und des ersten Permeats C gebildet.

Ferner wird in der veranschaulichten Ausführungsform das dritte Retentat M bei der Bildung des ersten Einsatzgemischs B verwendet und insbesondere als Teil dieses der optionalen Erwärmung 4 unterworfen. Insbesondere kann bei Bedarf eine entsprechende Verdichtung 9 erfolgen, die ebenfalls eine Erwärmung bewirkt.

In Figur 2 ist ein Verfahren gemäß einer Ausführungsform der Erfindung in Form eines schematischen Prozessflussdiagramms veranschaulicht und insgesamt mit 200 bezeichnet.

Zusätzlich zu dem in Figur 1 veranschaulichten Verfahren 100 ist hier eine Kohlendioxidentfernung 10 dargestellt. Im Übrigen entspricht das in Figur 2 veranschaulichte Verfahren 200 im Wesentlichen dem in Figur 1 veranschaulichten Verfahren 100. In der Kohlendioxidentfernung 10 kann dabei ein Spül-und Verdrängungsgas M eingesetzt werden, das unter Verwendung zumindest eines Teils des zweiten und/oder des dritten Retentats G bzw. M gebildet wird.

In Figur 3 ist ein Verfahren einer weiteren Ausführungsform der vorliegenden Erfindung in Form eines schematischen Prozessflussdiagramms dargestellt und insgesamt mit 300 bezeichnet. Das Verfahren 300 gemäß Figur 3 unterscheidet sich insbesondere durch die Positionierung der Kohlendioxidentfernung 10 von dem Verfahren 200 gemäß Figur 2. Während in dem Verfahren 200 gemäß Figur 2 die Kohlendioxidentfernung 10 stromauf der zweiten Membrantrennstufe 2 erfolgt und dabei die erläuterten ersten und dritten Permeate C und L sowie das Restgemisch I bearbeitet werden, erfolgt in dem in Figur 3 veranschaulichten Verfahren 300 eine Kohlendioxidentfernung 10 nur aus dem Restgemisch I und dem dritten Permeat L, die zu diesem Zweck separat zu dem zweiten Permeat C der Kohlendioxidentfernung 10 zugeführt und separat zu diesem zuvor einer Verdichtung 11 unterworfen werden. Eine Verdichtung 5 braucht daher nicht zu erfolgen. Wahlweise kann aber auch eine Zuspeisung zu einer Zwischenstufe eines in der Verdichtung 5 verwendeten Verdichters erfolgen.

In Figur 4 ist ein Verfahren gemäß einer weiteren Ausführungsform der vorliegenden Erfindung in Form eines schematischen Prozessflussdiagramms dargestellt und insgesamt mit 400 bezeichnet. Das Verfahren 400 gemäß Figur 4 stellt eine Variante gegenüber den Verfahren 200 bzw. 300 dar. Die Kohlendioxidentfernung 10 erfolgt hier aus dem Restgemisch I der Druckwechseladsorption 8. Hierzu erfolgt eine entsprechende separate Verdichtung 12.

Es versteht sich, dass die in den zuvor erläuterten Figuren gezeigten Verfahrensvarianten auch in Kombination und unabhänigig voneinander eingesetzt werden können, soweit der Rahmen der vorliegenden Erfindung, der durch die anhängenden Patentansprüche vorgegeben ist, nicht verlassen wird.

## Patentansprüche

1. Verfahren (100-400) zur Gewinnung von Reinhelium unter Verwendung einer ersten Membrantrennstufe (1), einer zweiten Membrantrennstufe (2) und einer dritten Membrantrennstufe (3), wobei der ersten Membrantrennstufe (1) ein erstes heliumhaltiges Einsatzgemisch, der zweiten Membrantrennstufe (2) ein zweites heliumhaltiges Einsatzgemisch und der dritten Membrantrennstufe (3) ein drittes heliumhaltiges Einsatzgemisch zugeführt wird, und wobei in der ersten Membrantrennstufe (1) ein erstes Permeat und ein erstes Retentat, in der zweiten Membrantrennstufe (2) ein zweites Permeat und ein zweites Retentat und in der dritten Membrantrennstufe (3) ein drittes Permeat und ein drittes Retentat gebildet werden, **dadurch gekennzeichnet, dass** das erste Einsatzgemisch unter Verwendung zumindest eines Teils eines Helium enthaltenden Ausgangsgemischs gebildet wird, dass das zweite Einsatzgemisch unter Verwendung zumindest eines Teils des ersten Permeats gebildet wird, dass das dritte Einsatzgemisch unter Verwendung zumindest eines Teils des zweiten Retentats gebildet wird, dass das zweite Permeat zumindest teilweise unter Erhalt des Reinheliums und eines Restgemischs durch Druckwechseladsorption bearbeitet wird, und dass zumindest ein Teil des dritten Permeats und/oder zumindest ein Teil des dritten Retentats in das Verfahren (100) zurückgeführt wird.

2. Verfahren (100-400) nach Anspruch 1, bei dem zumindest ein Teil des dritten Retentats bei der Bildung des ersten Einsatzgemischs verwendet wird.

3. Verfahren (100-400) nach Anspruch 1 oder 2, bei dem zumindest ein Teil des Restgemischs bei der Bildung des zweiten Einsatzgemischs verwendet wird.

4. Verfahren (100-400) nach Anspruch 3, bei dem zumindest ein Teil des dritten Permeats bei der Bildung des zweiten Einsatzgemischs verwendet wird.

5. Verfahren (100, 200) nach Anspruch 4, bei dem das Restgemisch oder dessen bei der Bildung des zweiten Einsatzgemischs verwendeter Teil, das erste Permeat oder dessen bei der Bildung des zweiten Einsatzgemischs verwendeter Teil und das dritte Permeat oder dessen bei bei der Bildung des zweiten Einsatzgemischs verwendeter Teil vereinigt und gemeinsam verdichtet werden.

6. Verfahren (200) nach Anspruch 5, bei dem das Restgemisch oder dessen bei der Bildung des zweiten Einsatzgemischs verwendeter Teil, das erste Permeat oder dessen bei der Bildung des zweiten Einsatzgemischs verwendeter Teil und das dritte Permeat oder dessen bei bei der Bildung des zweiten Einsatzgemischs verwendeter Teil nach deren Vereinigung und gemeinsamer Verdichtung einer Kohlendioxidentfernung unterworfen werden.

7. Verfahren (300) nach Anspruch 4, bei dem das Restgemisch oder dessen bei der Bildung des zweiten Einsatzgemischs verwendeter Teil und das dritte Permeat oder dessen bei bei der Bildung des zweiten Einsatzgemischs verwendeter Teil vereinigt und gemeinsam separat zu dem ersten Permeat oder dessen bei der Bildung des zweiten Einsatzgemischs verwendeten Teil verdichtet werden.

8. Verfahren (300) nach Anspruch 7, bei dem das Restgemisch oder dessen bei der Bildung des zweiten Einsatzgemischs verwendeter Teil und das dritte Permeat oder dessen bei bei der Bildung des zweiten Einsatzgemischs verwendeter Teil nach deren Vereinigung und deren gemeinsamer Verdichtung einer Kohlendioxidentfernung unterworfen werden.

9. Verfahren (400) nach Anspruch 4, bei dem das dritte Permeat oder dessen bei bei der Bildung des zweiten Einsatzgemischs verwendeter Teil und das erste Permeat oder dessen bei der Bildung des zweiten Einsatzgemischs verwendeter Teil vereinigt und gemeinsam separat zu dem Restgemisch oder dessen bei der Bildung des zweiten Einsatzgemischs verwendeten Teil verdichtet werden.

10. Verfahren (400) nach Anspruch 9, bei dem das dritte Permeat oder dessen bei bei der Bildung des zweiten Einsatzgemischs verwendeter Teil und das erste Permeat oder dessen bei der Bildung des zweiten Einsatzgemischs verwendeter Teil nach deren Vereinigung und deren gemeinsamer Verdichtung einer Kohlendioxidentfernung unterworfen werden.

11. Verfahren (200-400) nach Anspruch 6, 8 oder 10, bei der die Kohlendioxidentfernung unter Verwendung eines Adsorptionsprozesses durchgeführt wird, in dem zumindest ein Spül- und Verdrängungsgas eingesetzt wird.

12. Verfahren (200-400) nach Anspruch 10, bei dem das oder eines der Spül- und Verdrängungsgase zumindest ein Teil des zweiten oder dritten Retentats verwendet wird.

13. Verfahren (100-400) nach einem der vorstehenden Ansprüche, bei dem das zweite Permeat oder dessen durch Druckwechseladsorption bearbeiteter Teil einer Wasserstoffentfernung unterworfen wird.

14. Verfahren (100-400) nach einem der vorstehenden Ansprüche, bei dem entweder die erste Membrantrennstufe (1) auf einem Druckniveau von 10 bis 120 bar, die zweite Membrantrennstufe (2) auf einem Druckniveau von 10 bis 120 bar und die dritte Membrantrennstufe (3) auf einem Druckniveau von 10 bis 120 bar betrieben wird, oder bei dem die erste Membrantrennstufe (1) auf einem Druckniveau von 30 bis 100 bar, die zweite Membrantrennstufe (2) auf einem Druckniveau von 30 bis 100bar und die dritte Membrantrennstufe (3) auf einem Druckniveau von 30 bis 100 bar betrieben wird.

15. Anlage (100-400) zur Gewinnung von Reinhelium mit einer ersten Membrantrennstufe (1), einer zweiten Membrantrennstufe (2) und einer dritten Membrantrennstufe (3), wobei Mittel vorgesehen sind, die dafür eingerichtet sind, der ersten Membrantrennstufe (1) ein erstes heliumhaltiges Einsatzgemisch, der zweiten Membrantrennstufe (2) ein zweites heliumhaltiges Einsatzgemisch und der dritten Membrantrennstufe (3) ein drittes heliumhaltiges Einsatzgemisch zuzuführen, wobei die erste Membrantrennstufe (1) dafür eingerichtet ist, ein erstes Permeat und ein erstes Retentat zu bilden, wobei die zweite Membrantrennstufe (2) dafür eingerichtet ist, ein zweites Permeat und ein zweites Retentat zu bilden, und wobei die dritte Membrantrennstufe (3) dafür eingerichtet ist, ein drittes Permeat und ein drittes Retentat zu bilden, **gekennzeichnet durch** Mittel, die dafür eingerichtet sind, das erste Einsatzgemisch unter Verwendung zumindest eines Teils eines Helium enthaltenden Ausgangsgemischs zu bilden, das zweite Einsatzgemisch unter Verwendung zumindest eines Teils des ersten Permeats zu bilden, das dritte Einsatzgemisch unter Verwendung zumindest eines Teils des zweiten Retentats zu bilden, das zweite Permeat zumindest teilweise unter Erhalt des Reinheliums und eines Restgemischs durch Druckwechseladsorption zu bearbeiten, und zumindest einen Teil des dritten Permeats und/oder zumindest einen Teil des dritten Retentats in das Verfahren (100) zurückzuführen.
